(19) Europäisches Patentamt
European Patent Office
Office européen des brevets

(11) EP 2 614 115 B1

(12) **EUROPEAN PATENT SPECIFICATION**

(45) Date of publication and mention of the grant of the patent:
**27.04.2016 Bulletin 2016/17**

(21) Application number: **11749419.5**

(22) Date of filing: **31.08.2011**

(51) Int Cl.:
***C08L 23/14*** *(2006.01)* ***C08L 23/10*** *(2006.01)*
*C08L 23/18* *(2006.01)* *C08L 23/20* *(2006.01)*

(86) International application number:
**PCT/EP2011/064937**

(87) International publication number:
**WO 2012/031953 (15.03.2012 Gazette 2012/11)**

(54) **POLYOLEFIN COMPOSITIONS HAVING IMPROVED SEALABILITY**

POLYOLEFINZUSAMMENSETZUNGEN MIT VERBESSERTER SIEGELFÄHIGKEIT

COMPOSITIONS DE POLYOLÉFINE AYANT UNE SCELLABILITÉ AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2010 EP 10175438**

(43) Date of publication of application:
**17.07.2013 Bulletin 2013/29**

(73) Proprietor: **Basell Poliolefine Italia S.r.l.**
**20127 Milano (IT)**

(72) Inventors:
- **GRAZZI, Michele**
**I-44040 Casaglia (FE) (IT)**
- **PELLEGATTI, Giampaolo**
**I-44030 Boara (FE) (IT)**
- **BARALDI, Letizia**
**I-44100 S.Bartolomeo in Bosco (FE) (IT)**

(74) Representative: **Gaverini, Gaetano Luigi Attilio**
**Basell Poliolefine Italia S.r.l.**
**Intellectual Property**
**P.le Donegani, 12**
**44122 Ferrara (IT)**

(56) References cited:
**WO-A1-99/57194**
**WO-A1-2008/017525**
**WO-A1-2009/077287**
**WO-A1-2011/064131**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to polyolefin compositions comprising propylene copolymers and butene-1 polymers, particularly useful in the preparation of heat-sealable films, and to the sheets and films thereof.

Crystalline copolymers of propylene with other olefins (mainly ethylene, butene-1 or both), or mixtures of such copolymers with other olefin polymers are known in the prior art as heat-sealable materials.

These crystalline copolymers are obtained by polymerizing propylene with minor amounts of other olefin comonomers in the presence of coordination catalysts.

The polymerized comonomer units are statistically distributed in the resulting copolymer and the melting temperature of said copolymers results to be lower than the melting temperature of crystalline propylene homopolymers. Also the seal initiation temperature (as later defined in detail) of the said copolymers results to be favorably low.

However, to avoid or at least reduce problems of adhesion or sticking to hot metal parts during processing of the articles comprising such copolymers (in particular stretching rolls during commercial production of oriented films), it would be beneficial to keep the melting temperature as high as possible.

Many technical solutions are disclosed in the prior art in order to find a good balance between heat-sealability (as demonstrated by low seal initiation temperatures), melting temperature and other useful properties, like solubility in organic solvents, optical properties (haze and gloss) and rheological properties.

In particular, according to EP0560326 such effect is achieved by mixing two copolymers of propylene with different amounts of $C_4/C_{10}$ $\alpha$-olefin(s). The so obtained compositions achieve remarkably high melting temperature values with low seal initiation temperature values. However, due to the presence of significant amounts of a propylene copolymer containing high amounts of $C_4/C_{10}$ $\alpha$-olefin(s), the content of fraction soluble in organic solvents, in particular in xylene at room temperature, becomes already relatively high at seal initiation temperatures around 95°C, as shown in the examples.

WO2009/077287 A1 discloses a copolymer of propylene with hexene-1 containing from 5 to 9% by weight of recurring units derived from hexene-1 and having a melting temperature from 125°C to 140°C for the production of blown films.

WO2008/017525 A1 discloses a 1-butene terpolymer containing ethylene and another a-olefin suitable as modifiers to be added to polypropylene crystalline matrices to improve the heat sealing properties, in particular to lower the seal initiation temperature (SIT).

It has now surprisingly been found that a valuable balance of heat-sealability, melting temperature and optical properties, with relatively low amounts of fraction soluble in organic solvents, is obtained by blending a major amount of specific propylene/hexene-1 copolymers with a butene-1 polymer.

In fact it has been found that by adding relatively low amounts of butene-1 polymer to such propylene/hexene-1 copolymers, the seal initiation temperature is remarkably reduced, while the melting temperature remains substantially unaffected.

Therefore the present invention provides polyolefin compositions comprising (by weight):

A) from 70 to 97%, preferably from 70 to 90%, more preferably from 70 to 85% of a copolymer of propylene with hexene-1 containing from 3 to 9% by weight, preferably from 5 to 9% by weight, more preferably from 6 to 9% by weight, in particular from 6.5 to 9% by weight, of recurring units derived from hexene-1, said copolymer having a melting temperature from 125°C to 143°C, preferably from 128°C to 143°C;

B) from 3 to 30%, preferably from 10 to 30%, more preferably from 15 to 30% of a butene-1 homopolymer or copolymer of butene-1 and ethylene.

The term "copolymer" includes polymers containing more than one kind of comonomers, such as terpolymers.

The said amounts of A) and B) are referred to the total weight of A) + B).

The said amounts of hexene-1 units are referred to the total weight of the copolymer A).

The said melting temperature values for the copolymer A) are determined by differential scanning calorimetry, according to ISO 11357-3, with a heating rate of 20 °C/minute.

Recurring units derived from other comonomers, selected in particular from ethylene and $CH_2$=CHR $\alpha$-olefins where R is a $C_2$-$C_8$ alkyl radical, hexene-1 excluded, can be present in copolymer A), provided that the final properties of the copolymer are not substantially worsened. Examples of the said $CH_2$=CHR $\alpha$-olefins are butene-1, 4-methyl-1-pentene, octene-1. Among the said other comonomers, ethylene is preferred.

Indicatively, the total amount of recurring units derived from comonomer(s) different from propylene and hexene-1 in copolymer A) is from 0.5 to 2% by weight, preferably from 0.5 to 1.5% by weight, referred to the total weight of the copolymer.

Moreover, the copolymer A) is semicrystalline, as it has a crystalline melting point, and typically has a stereoregularity of isotactic type.

Preferably, said copolymer A) exhibits at least one of the following features:

- a solubility in xylene at room temperature (i.e. about 25° C) equal to or lower than 25% by weight, preferably equal to or lower than 20 % by weight;
- Isotacticity Index equal to or higher than 97%, determined as mm triads using $^{13}C$-NMR;
- a molecular weight distribution expressed by the $\overline{M}w/\overline{M}n$ ratio, measured by GPC, (Gel Permeation Chromathograpy), from 3.8 to 7.

In particular, the copolymer A) has preferably a Melt Flow Rate (MFR, measured according to ISO 1133, 230°C/2.16 kg, i.e. at 230°C, with a load of 2.16 kg) from 0.1 to 10 g/10 min., more preferably from 0.1 to 5 g/10 min., in particular from 0.1 to 3 g/10 min.

Such copolymer A) can be obtained with polymerization processes carried out in the presence of stereospecific Ziegler-Natta catalysts supported on magnesium dihalides. By properly dosing the molecular weight regulator (preferably hydrogen), the said preferred Melt Flow Rate values and melting temperature values are obtained, when the amount of recurring units derived from hexene-1 is within the above said range of from 3 to 9% by weight, preferably from 5 to 9% by weight.

The polymerization process, which can be continuous or batch, is carried out following known techniques and operating in liquid phase, in the presence or not of inert diluent, or in gas phase, or by mixed liquid-gas techniques. It is preferable to carry out the polymerization in gas phase.

Polymerization reaction time, pressure and temperature are not critical, however it is best if the temperature is from 20 to 100°C. The pressure can be atmospheric or higher.

As previously mentioned, the regulation of the molecular weight is carried out by using known regulators, hydrogen in particular.

The said stereospecific Ziegler-Natta polymerization catalysts comprise the product of the reaction between:

1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters and succinic acid esters.

Suitable succinic acid esters are represented by the formula (I):

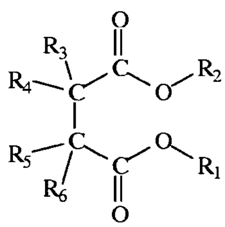

(I)

wherein the radicals $R_1$ and $R_2$, equal to or different from each other, are a C1-C20 linear or branched alkyl, alkenyl, cycloalkyl, aryl, arylalkyl or alkylaryl group, optionally containing heteroatoms; the radicals $R_3$ to $R_6$ equal to or different from each other, are hydrogen or a C1-C20 linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably C1-C8 alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen

and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred. Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula $R_a^1R_b^2Si(OR^3)_c$, where a and b are integer numbers from 0 to 2, c is an integer from 1 to 3 and the sum (a+b+c) is 4; $R_1$, $R^2$, and $R^3$ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred. Other preferred silicon compounds are diisopropyl dimethoxy silane and dicyclopentyl dimethoxysilane.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The homopolymers B) of butene-1 or copolymers B) of butene-1 and ethylene are well known in the art, particularly for their good properties in terms of pressure resistance and creep resistance.

Suited homoplymers B) of butene-1 are linear, semicrystalline, higly isotactic homopolymers (having in particular an isotacticity from 96 to 99%, measured both as mmmm pentads/total pentads using NMR, and as quantity by weight of matter soluble in xylene at 0°C).

Suitable copolymers B) of butene-1 and ethylene are the copolymers preferably containing up to 20% by weight, in particular up to 15% by weight of ethylene.

All these homopolymers of butene-1 or copolymers of butene-1 and ethylene can be obtained with polymerization processes and catalysts well known in the art, like low-pressure Ziegler-Natta polymerization of butene-1, for example by polymerizing butene-1 (and ethylene) with catalysts based on $TiCl_3$, or supported catalysts systems of the same kind as described above for the preparation of the copolymer A).

Other preferred features of the homo- or copolymers B) are:

- a flexural modulus of 80 MPa or higher, in particular 80 to 550 MPa;
- MFR measured according to ISO 1133 at 190°C, 2.16 kg, of 0.5 - 20 g/10 min., in particular 0.5 - 10 g/10 min.;
- a melting point Tm(II) of crystalline form 2 (the first to form, being favoured kinetically) from 81 to 115°C.

As previously said, the compositions of the present invention have low seal initiation temperatures (preferably lower than 110°C, more preferably lower than 100°C, most preferably lower than 90°C) and high melting temperature, which is substantially the same as the pure copolymer A), thus from 125°C to 143°C, preferably from 128°C to 143°C.

In addition to the said balance of reduced heat-sealability, melting temperature and good optical properties, the compositions of the present invention contain very low amounts of gels (also called "fish eyes"), which is a measure of improved homogeneity, good phase compatibility and enhanced processability.

Moreover, they comprise relatively high amounts of crystalline polymer, as demonstrated by their fusion enthalpy, which is preferably of 65 J/g or more, most preferably of 70 J/g or more, determined by differential scanning calorimetry, according to ISO 11357-3, with a heating rate of 20 °C/minute.

Thus, due to their relatively high crystallinity, the compositions of the present invention are characterized by a strongly reduced stickiness at high temperatures, and by low amounts of fraction soluble in organic solvents, in particular in xylene at room temperature.

Particularly preferred among the compositions of the present invention are those having MFR values (ISO 1133, 230°C/2.16 kg) equal to or greater than 0.5 g/10 min., the upper limit being indicatively of 15 g/10 min. In fact such compositions are particularly suited for use in demanding melt-processing conditions, like those typically employed in the processes for production of bioriented polypropylene (BOPP) films.

All the said MFR values can be obtained directly in polymerization, or by subjecting to degradation a precursor polymer or polymer composition having lower MFR values.

The degradation treatment, when used, can be carried out under the conditions known in the art to be effective in reducing the molecular weight of olefin polymers, thus modifying the rheology. Such degradation treatment does not substantially affect the sealing and mechanical properties.

In particular it is known that the molecular weight of olefin polymers can be reduced by application of heat (thermal degradation), preferably in the presence of initiators of free radicals, like ionizing radiations or chemical initiators.

Particularly preferred among the chemical initiators are the organic peroxides, specific examples of which are 2,5-dimethyl-2,5-di (t-butylperoxy) hexane and dicumyl-peroxide.

The degradation treatment with the chemical initiators can be carried out in the conventional apparatuses generally used for processing polymers in the molten state, like in particular single or twin screw extruders. It is preferred to operate under inert atmosphere, for instance under nitrogen.

The amount of chemical initiator to be added to the polyolefin composition can be easily determined by one skilled in the art, based upon the starting MFR value and the desired final MFR value.

The temperature employed for the degradation treatment is preferably in the range of from 180 to 300 °C.

The compositions of the present invention are obtainable by melting and mixing the components A) and B), and the mixing is effected in a mixing apparatus at temperatures generally of from 180 to 310°C, preferably from 190 to 280°C, more preferably from 200 to 250°C.

Any known apparatus and technology can be used for this purpose.

Useful melt-mixing apparatus in this context are in particular extruders or kneaders, and particular preference is given to twin-screw extruders. It is also possible to premix the components at room temperature in a mixing apparatus.

The compositions of the present invention can also contain additives commonly employed in the art, such as antioxidants, light stabilizers, heat stabilizers and fillers.

Among the various applications made possible by the previously described properties, the compositions of the present invention are particularly useful for the preparation of films and sheets.

Films are generally characterized by a thickness of less than 100 μm, while sheets have generally a thickness greater than or equal to 100 μm.

Both films and sheets can be mono- or multilayer.

In the case of multilayer films or sheets, at least one layer comprises the compositions of the present invention. Each layer that does not comprise the compositions of the present invention can be composed of other olefin polymers, such as polypropylene homopolymer or polyethylene.

Generally speaking, the films and sheets of this invention can be prepared by known techniques, such as extrusion and calendering.

Particularly preferred are the bioriented films (BOPP).

Films of such kind are generally prepared by well known processes, such as the tenter frame process or the double bubble process.

In both processes, the polymer components in form of granules are fed via feed hoppers into extruders where the polymers are first melted, compressed, mixed and finally metered out with a constant rate. The necessary heat to melt the polymers is provided by heater bands round the barrels and mainly by the frictional heat coming from the polymer moving between the screw and the barrel.

In the tenter frame process the extruded molten material is pulled away from a flat die, then cooled, heated again and stretched both in the Machine Direction (MD) and in the Transverse Direction (TD), in dedicated ovens. The orientation steps can be carried out or sequentially (first in MD and later in TD in the sequential process), or at the same time (simultaneous process). The stretching ratio in MD generally varies from 3 to 6 while it's much higher in TD (up to 10) in the sequential process. In the simultaneous process, the stretching ratios are much more similar and preferably range from 5 to 8 for both directions.

Thus, the stretching ratios generally used in the industrial practice are from 3 to 10.

After the stretching process, the film is cooled, sometimes re-heated to stabilize its dimensions and then wound-up.

In the double bubble process, the molten polymers leave a circular die and are instantly cooled by means of a water cooling ring with a dry internal calibrator to obtain a thick primary tube. The diameter of this primary tube is fairly small (300 to 400 μm). This tube is then conveyed to the top of the double bubble line and is then guided through a set of infrared heaters/ovens. When the bubble has reached a temperature near to the melting temperature, it is blown by means of air. Bi-axial orientation is obtained simultaneously by inflation and by a different speed ratio between the nip rolls before and after the ovens. The orientation is usually 5 to 6 times in both directions. After the orientation step, the bubble is cooled with cooling rings, flattened and wound on winding units.

The winding units are often mounted on a total rotating platform.

The film of this invention preferably has a structure with two layers A/B or three layers A/B/A, in which the layer

or layers A) comprise or are substantially made of the composition of the present invention, and layer B) is typically made of a propylene homopolymer or a copolymer of propylene containing minor amounts (generally of 10% by weight or less) of $\alpha$-olefin comonomers, preferably selected from ethylene and/or butene-1. The various layers can be present in variable amounts relative to the total weight of the film. The layer or layers A) are preferably present in amounts that generally range from about 5 to about 30% of the total weight of the film.

More preferably, each of the A) layers is present in amounts between 10 and 15%.

Specific examples of films containing the compositions of the present invention are disclosed hereinafter in the test for determining the seal initiation temperature (S.I.T.).

The particulars are given in the following examples, which are given to illustrate, without limiting, the present invention.

Unless differently stated, the following test methods are used to determine the properties reported in the detailed description and in the examples.

- **1-hexene content and isotacticity**

Determined by $^{13}$C-NMR spectroscopy.

$^{13}$C-NMR spectra are acquired on a *Bruker DPX-600* spectrometer operating at 150.91 MHz in the Fourier transform mode at 120 °C.

The samples are dissolved in 1,1,2,2-tetrachloroethane-*d2* at 120 °C with a 8% wt/v concentration. Each spectrum is acquired with a 90° pulse, 15 seconds of delay between pulses and CPD (WALTZ 16) to remove $^{1}$H-$^{13}$C coupling. About 1500 transients are stored in 32K data points using a spectral window of 6000 Hz.

The peak of the Propylene CH is used as internal reference at 28.83 ppm.

The evaluation of diad distribution and the composition is obtained from $S\alpha\alpha$ using the following equations:

$$PP = 100\ S\alpha\alpha\ (PP)/\Sigma$$

$$PH = 100\ S\alpha\alpha\ (PH)/\Sigma$$

$$HH = 100\ S\alpha\alpha\ (HH)/\Sigma$$

Where

$$\Sigma = \Sigma\ S\alpha\alpha$$

$$[P] = PP + 0.5PH$$

$$[H] = HH + 0.5PH$$

- **Ethylene content of the butene-1 copolymers**

Determined by I.R. spectroscopy.

- **Melt Flow Rate MFR**

Measured according to ISO 1133 at 230°C with 2.16 kg load for propylene (co)polymers and for the final compositions containing A) and B), at 190°C with 2.16 kg load for butene-1 (co)polymers B).

- **Butene-1 polymers: Determination of Solubility in Xylene at 0°C (% by weight)**

2.5 g of polymer are dissolved in 250 ml of xylene, at 135°C, under agitation. After 20 minutes, the solution is cooled to 0°C under stirring, and then it is allowed to settle for 30 minutes. The precipitate is filtered with filter paper; the

solution is evaporated under a nitrogen current, and the residue dried under vacuum at 140°C until constant weight. The weight percentage of polymer soluble in xylene at 0°C is then calculated. The percent by weight of polymer insoluble in xylene at room temperature is considered the isotactic index of the polymer.

- **Propylene polymers and final composition: determination of Solubility in Xylene at room temperature (% by weight)**

2.5 g of polymer are dissolved in 250 ml of xylene, at 135°C, under agitation. After 20 minutes, the solution is cooled to 25°C under stirring, and then it is allowed to settle for 30 minutes. The precipitate is filtered with filter paper; the solution is evaporated under a nitrogen current, and the residue dried under vacuum at 80°C until constant weight. The weight percentage of polymer soluble in xylene at room temperature is then calculated. The percent by weight of polymer insoluble in xylene at room temperature is considered the isotactic index of the polymer. This value corresponds substantially to the isotactic index determined by extraction with boiling n-heptane, which by definition constitutes the isotactic index of polypropylene.

- **Propylene polymers: determination of melting temperature and fusion enthalpy**

The melting temperature and fusion enthalpy values are determined using the following procedure according to ISO 11357 Part 3.

Differential scanning calorimetric (DSC) data is obtained using a DSC Q1000 TA Instruments. Samples weighing approximately 6-8 mg are sealed in aluminum sample pans. The samples are subjected to a first heating run from 5 °C to 200 °C with a heating rate of 20 °C/minute, and kept at 200 °C under isothermal conditions for 5 minutes. Then the samples are cooled from 200 °C to 5 °C with a cooling rate of 20 °C/minute, and kept at 5 °C under isothermal conditions for 5 minutes, after which they are subjected to a second heating run from 5 °C to 200 °C with a heating rate of 20 °C/minute. The melting temperature is the temperature of the highest melting peak obtained in the second heating run. The fusion enthalpy is the total enthalpy, calculated from the area of the highest melting peak and of the other contiguous peaks, when present.

- **Butene-1 polymers: determination of melting temperature**

The melting temperature values are determined using the following procedure according to ISO 11357 Part 3.

Differential scanning calorimetric (DSC) data is obtained using a DSC Q1000 TA Instruments. Samples weighing approximately 6-8 mg are sealed in aluminum sample pans. The samples are subjected to a first heating run from 23 °C to 180 °C with a heating rate of 10 °C/minute, and kept at 180 °C under isothermal conditions for 2 minutes. Then the samples are cooled from 180 °C to - 20 °C in the case of copolymers and to 20 °C in the case of homopolymers, with a cooling rate of 10 °C/minute, and kept at - 20 or 20 °C under isothermal conditions for 5 minutes, after which they are subjected to a second heating run from - 20 or 20 °C to 180 °C with a heating rate of 10 °C/minute. The melting temperature is the temperature of the highest melting peak obtained in the second heating run.

- **MWD and $M_w/M_n$ determination by Gel Permeation Chromatography (GPC)**

MWD and particularly the ratio $\overline{M}_w/\overline{M}_n$ is determined using a Waters 150-C ALC/GPC system equipped with a TSK column set (type GMHXL-HT) working at 135°C with 1,2-dichlorobenzene as solvent (ODCB) (stabilized with 0.1 vol. of 2, 6-di-t-butyl p-cresole (BHT)) at flow rate of 1 ml/min. The sample is dissolved in ODCB by stirring continuously at a temperature of 140°C for 1 hour.

The solution is filtered through a 0.45 μm Teflon membrane. The filtrate (concentration 0.08-1.2g/l injection volume 300 μl) is subjected to GPC. Monodisperse fractions of polystyrene (provided by Polymer Laboratories) are used as standard. The universal calibration for butene-1 polymers is performed by using a linear combination of the Mark-Houwink constants for PS (K=7.11x10-5dl/g; a=0. 743) and PB(K=1.18x10-4dl/g; α=0.725).

- **Seal Initiation Temperature (S.I.T.)**

Determined as follows.

**Preparation of the film specimens**

Some films with a thickness of 50 μm are prepared by extruding each test composition in a single screw Collin

extruder (length/diameter ratio of screw: 25) at a film drawing speed of 7 m/min and a melt temperature of 210-250 °C. Each resulting film is superimposed on a 1000 μm thick film of a propylene homopolymer having an isotacticity index of 97 and a MFR of 2 g/10 min. The superimposed films are bonded to each other in a Carver press at 200 °C under a 9000 kg load, which is maintained for 5 minutes.

The resulting laminates are stretched longitudinally and transversally, i.e. biaxially, by a factor 6 with a TM Long film stretcher at 150 °C, thus obtaining a 20 μm thick film (approximately 18 μm homopolymer + 2 μm test composition).

For each test, film specimens 15 mm wide are superimposed in alignment, the adjacent layers being layers of the particular test composition.

The superimposed specimens are sealed along one of the 15 mm sides with a RDM HSE-3 five bars sealer type. Sealing time is 0.5 seconds at a pressure of 0.1 MPa (14.5 psi). The sealing temperature is increased for each seal with steps of 3°C, starting from a sufficiently low temperature to make it possible to determine a significant level of sealing force. The sealed samples are left to cool for 24 hours and then their unsealed ends are attached to an Instron machine (4301 model) where they are tested at a crosshead speed of 100 mm/min (grip distance 50 mm). Reference is standard ASTM F 88.

The S.I.T. is the minimum sealing temperature at which the seal shows a sealing force of 2.0 Newtons in the said test conditions.

- **Fish eyes count**

Determined according to internal method MA 17108, available upon request.

A 50 μm sample cast film is obtained as above described for the S.I.T. test.

The film fish eyes density for each class (size) is then determined by analyzing a representative film amount through projection (projector Neo Solex 1000 with 1000 W lamp and objective Neo Solex F 300 or equivalent) on a standard white wall - chart which is set at a fixed distance from the projector and reports standard reading targets (the so called "sizing lines" or "gel classes"), or alternatively by using a secondary technique, i.e. an automatic optical scanning device (CCD camera based), to be calibrated and validated vs. the primary or "projector" procedure described above.

- **Flexural modulus**

Measured according to ISO 178.

PREPARATION OF THE COPOLYMERS A)

Two copolymers of propylene with hexene-1, hereinafter called Copo 1 and Copo 2, are prepared as follows.

The solid catalyst component used in polymerization is a highly stereospecific Ziegler-Natta catalyst component supported on magnesium chloride, containing about 2.2% by weight of titanium and diisobutylphthalate as internal donor, prepared by analogy with the method described in WO03/054035 for the preparation of catalyst component A .

CATALYST SYSTEM AND PREPOLYMERIZATION TREATMENT

Before introducing it into the polymerization reactor, the solid catalyst component described above is contacted at 15 °C for about 6 minutes with aluminum triethyl (TEAL) and thexyltrimethoxysilane (2,3-dimethyl-2-trimethoxysilyl-butane), in a TEAL/ thexyltrimethoxysilane weight ratio equal to about 7 and in such quantity that the TEAL/solid catalyst component weight ratio be equal to about 6.

The catalyst system is then subjected to prepolymerization by maintaining it in suspension in liquid propylene at 20 °C for about 20 minutes before introducing it into the polymerization reactor.

POLYMERIZATION

The polymerization is carried out in a gas phase polymerization reactor by feeding in a continuous and constant flow the prepolymerized catalyst system, hydrogen (used as molecular weight regulator), propylene and hexene-1 in the gas state.

The main polymerization conditions are:

| | **Copo 1** | **Copo 2** |
|---|---|---|
| Temperature: | 75°C | 75°C |
| Pressure: | 16 MPa | 16 MPa |

(continued)

| | Copo 1 | Copo 2 |
|---|---|---|
| molar ratio $H_2$/C3-: | 0.001 | 0.005 |
| molar ratio C6-/(C6- + C3-): | 0.013 | 0.021 |
| residence time: | 64 minutes | 45 minutes |
| Note: C3- = propylene; C6- = hexene-1. | | |

The polymer particles exiting the reactor are subjected to a steam treatment to remove the reactive monomers and volatile substances, and then dried.

The resulting copolymers have the following properties:

| | Copo 1 | Copo 2 |
|---|---|---|
| Hexene-1 content | 4.3% by weight | 7.5% by weight |
| MFR: | 0.6 g/10 min. | 1.8 g/10 min. |
| Amount of fraction soluble in xylene at room temperature: | 2.4% by weight | 7.5% by weight |
| Melting temperature: | 139.7°C | 133°C |

Component B)

Butene-1 copolymer, identified as PB-1, containing 2.6% by weight of ethylene and having the following properties:

- Amount of fraction soluble in xylene at 0°C of 40% by weight;
- Flexural modulus of 140 MPa;
- MFR of 2.6 g/10 min.;
- Tm (II) of 89°C.

Examples 1 to 4 and Comparison Examples 1 and 2

The components (A) and (B) are melt-blended in the amounts reported in Table 1 and tested. The test results are reported in Table 1 as well.

Melt-blending is carried out under nitrogen atmosphere in a twin screw extruder, at a rotation speed of 250 rpm and a melt temperature of 200-250° C.

Table 1

| Composition (% by weight) | Ex.1 | Ex. 2 | Ex.3 | Ex.4 | Comp. Ex. 1 | Comp. Ex. 2 |
|---|---|---|---|---|---|---|
| Copo 1 | 90 | 80 | - | - | 100 | - |
| Copo 2 | - | - | 90 | 80 | - | 100 |
| PB-1 | 10 | 20 | 10 | 20 | - | - |
| Properties | | | | | | |
| MFR | 0.8 | 1 | 2.1 | 2.3 | 0.6 | 1.8 |
| Xylene solubility, wt% | 12.3 | 18.7 | 14.7 | 26.4 | 2.4 | 7.5 |
| S.I.T., °C | 96 | 73 | 75 | 68 | 114 | 99 |
| Melting temperature, °C | 138.7 | 141.4 | 131.7 | 134.4 | 139.7 | 133 |
| Fusion enthalpy, J/g | 88.3 | 79.8 | 77.4 | 72.1 | 86.7 | 78.3 |
| Fish eyes with diameter ≥ 1.5 mm | 0 | 0 | 0 | 0 | 0 | 0 |
| Fish eyes with diameter < 1.5-0.7mm | 0 | 1 | 1 | 0 | 1 | 2 |
| Fish eyes with diameter < 0.7-0.5 mm | 3 | 6 | 4 | 6 | 6 | 2 |

## Claims

1. Polyolefin compositions comprising, all percentages being by weight:

   A) from 70 to 97% of a copolymer of propylene with hexene-1 containing from 3 to 9% by weight of recurring units derived from hexene-1, said copolymer having a melting temperature from 125°C to 143°C;
   B) from 3 to 30% of a butene-1 homopolymer or copolymer of 1-butene and ethylene

2. The polyolefin composition of claim 1, wherein component A) has a MFR value, measured according to ISO 1133, 230°C/2.16 kg, from 0.1 to 10 g/10 min.

3. The polyolefin compositions of claim 1, wherein component A) has a fusion enthalpy of 65 J/g or more.

4. The polyolefin compositions of claim 1, having MFR equal to or greater than 0.5 g/10 min.

5. The polyolefin compositions of claim 1, wherein component B) is selected from butene-1 homopolymers and butene-1 copolymers containing up to 15% by weight of comonomer(s).

6. The polyolefin composition of claim 1, wherein component B) has a flexural modulus of 80 MPa or higher.

7. Mono- or multilayer films or sheets, wherein at least one layer comprises the compositions of claim 1.

8. The films of claim 7, in form of bioriented films.

## Patentansprüche

1. Polyolefinzusammensetzungen, wobei alle Prozente Gewichtsprozente sind, umfassend:

   A) von 70 % bis 97 % eines Copolymers von Propylen mit Hexen-1, enthaltend von 3 Gew.-% bis 9 Gew.-% von Hexen-1 abgeleitete Repetiereinheiten, wobei das Copolymer eine Schmelztemperatur von 125 °C bis 143 °C aufweist;
   B) von 3 % bis 30 % eines Buten-1-Homopolymers oder Copolymers von 1-Buten und Ethylen.

2. Polyolefinzusammensetzung nach Anspruch 1, wobei Komponente A) einen nach ISO 1133, 230 °C/2,16 kg gemessenen MFR-Wert von 0,1 g/10 min bis 10 g/10 min aufweist.

3. Polyolefinzusammensetzungen nach Anspruch 1, wobei Komponente A) eine Schmelzenthalpie von 65 J/g oder mehr aufweist.

4. Polyolefinzusammensetzungen nach Anspruch 1, die eine MFR gleich oder größer als 0,5 g/10 min aufweisen.

5. Polyolefinzusammensetzungen nach Anspruch 1, wobei Komponente B) aus Buten-1-Homopolymeren und Buten-1-Copolymeren, enthaltend bis zu 15 Gew.-% Comonomer(e), ausgewählt ist.

6. Polyolefinzusammensetzung nach Anspruch 1, wobei Komponente B) einen Biegemodul von 80 MPa oder höher aufweist.

7. Einschicht- oder Mehrschicht-Feinfolien oder -Grobfolien, wobei mindestens eine Schicht die Zusammensetzungen nach Anspruch 1 umfasst.

8. Folien nach Anspruch 7, in Form biorientierter Folien.

## Revendications

1. Compositions polyoléfiniques comprenant, tous les pourcentages étant en poids:

A) 70 à 97% d'un copolymère de propylène et d'hexène-1, contenant 3 à 9% en poids d'unités récurrentes dérivées de l'hexène-1, ledit copolymère présentant une température de fusion de 125°C à 143°C ;
B) 3 à 30% d'un homopolymère de butène-1 ou d'un copolymère de butène-1 et d'éthylène.

**2.** Composition polyoléfinique selon la revendication 1, le constituant A) présentant une valeur MFR (indice de fluidité à chaud - mesuré selon la norme ISO 1133, à 230°C/2,16 kg) de 0,1 à 10 g/10 min.

**3.** Compositions polyoléfiniques selon la revendication 1, le constituant A) présentant une enthalpie de fusion de 65 J/g ou plus.

**4.** Compositions polyoléfiniques selon la revendication 1, présentant un MFR égal ou supérieur à 0,5 g/10 min.

**5.** Compositions polyoléfiniques selon la revendication 1, le constituant B) étant choisi parmi les homopolymères de butène-1 et les copolymères de buténe-1 contenant jusqu'à 15% en poids de comonomère(s).

**6.** Composition polyoléfinique selon la revendication 1, le constituant B) présentant un module de flexion de 80 MPa ou plus.

**7.** Films ou feuilles monocouches ou multicouches, au moins une couche comprenant les compositions selon la revendication 1.

**8.** Films selon la revendication 7, sous forme de films biorientés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0560326 A
- WO 2009077287 A1
- WO 2008017525 A1
- US 4399054 A
- EP 45977 A
- EP 361493 A
- EP 728769 A
- WO 03054035 A